# EUROPÄISCHE PATENTSCHRIFT

(11) **EP 3 708 914 B1**
(45) Veröffentlichungstag und Bekanntmachung des Hinweises auf die Patenterteilung: **03.05.2023**
(21) Anmeldenummer: 20163010.0
(22) Anmeldetag: 13.03.2020
(51) Int. Cl.: F24D 3/10, E03B 7/07, F16L 55/00, F16L 55/05, F16L 41/02, F16L 47/32, F16L 55/027, F16L 55/04, F16L 55/053, F16L 59/16, F16K 11/00, F24D 17/00

(54) **VORRICHTUNG ZUR DRUCKENTLASTUNG EINES WASSERSYSTEMS UND ANSCHLUSSMODUL MIT EINER SOLCHEN VORRICHTUNG**
DEVICE FOR DISCHARGING PRESSURE IN A WATER SYSTEM AND CONNECTION MODULE WITH SUCH A DEVICE
DISPOSITIF DE DÉCHARGE DE PRESSION D'UN SYSTÈME D'EAU ET MODULE DE RACCORDEMENT DOTÉ D'UN TEL DISPOSITIF

(30) Priorität: 15.03.2019 DE 202019001248 U
(43) Veröffentlichungstag der Anmeldung: 16.09.2020
(73) Patentinhaber: Gebr. Kemper GmbH + Co. KG Metallwerke, 57462 Olpe (DE)
(72) Erfinder: Heß, Markus, 57489 Drolshagen (DE)
(74) Vertreter: Grünecker Patent- und Rechtsanwälte PartG mbB

(56) Entgegenhaltungen:
- WO-A1-2014/181906
- DE-A1- 19 529 959
- DE-A1- 19 639 656
- DE-U1-202011 003 874
- RU-C1- 2 626 191
- US-A- 5 622 203
- US-A1- 2008 006 227
- US-A1- 2013 228 579
- US-B1- 6 206 030

## Beschreibung

Die vorliegende Erfindung betrifft eine Vorrichtung zur Druckentlastung eines Wassersystems mit den oberbegrifflichen Merkmalen von Anspruch 1. Eine solche Vorrichtung ist aus DE 195 29 959 A1 bekannt. Des Weiteren gibt die vorliegende Erfindung ein Modul zum Anschluss einer Armatur an ein Trinkwassersystem mit einer solchen Vorrichtung an.

In Trinkwassersystemen kann das Erwärmen von Wasser dazu führen, dass sich der Druck in den Leitungen auf ein kritisches Maß erhöht, sofern alle an das System angeschlossenen Ventile in einem geschlossenen Zustand verbleiben. Heutzutage werden Zirkulationsleitungen eingesetzt, um eine Stagnation von Warmwasser zu verhindern und durch Wärmezufuhr eines Wassererwärmers das Warmwasser auf einer bestimmten Mindesttemperatur zu halten. Nach einer Wasserentnahme von Warmwasser durch einen Verbraucher wird das entnommene Warmwasser zunächst durch frisches Kaltwasser ersetzt und von dem Wassererwärmer auf die gewünschte Temperatur erwärmt. Dabei kann sich der Wasserdruck in den Warmwasserleitungen erhöhen. Bei einer kritischen Druckzunahme können die Leitungen und die daran angeschlossenen Armaturen Schaden nehmen. Trotz abgesperrter Armaturen kann Wasser infolge des Überdrucks abgegeben werden.

Eine Aufgabe der vorliegenden Erfindung ist es daher, hierfür Abhilfe zu schaffen. Insbesondere will die vorliegende Erfindung eine Vorrichtung angeben, mit der sich Schäden an einem Trinkwassersystem und daran angeschlossenen Armaturen durch einen zu hohen Druck im Wassersystem vermeiden lassen.

Zur Lösung dieser Aufgabenstellung gibt die vorliegende Erfindung eine Vorrichtung mit den Merkmalen von Anspruch 1 an.

Die Vorrichtung zur Druckentlastung eines Wassersystems nach der vorliegenden Erfindung umfasst ein Gehäuse mit einer Eingangsöffnung und einer Ausgangsöffnung, das einen Strömungsweg zwischen der Eingangsöffnung und der Ausgangsöffnung ausbildet, und eine Druckentlastungskammer mit variablem Volumen, die fluidisch mit dem Strömungsweg in Verbindung steht. Für gewöhnlich ist das Gehäuse eine Rohrleitung, deren freie Enden die Eingangsöffnung und die Ausgangsöffnung ausbilden. Die Druckentlastungskammer wird in der Regel von einer die Eingangsöffnung mit der Ausgangsöffnung verbindenden Seitenwandung des Gehäuses ausgebildet oder steht durch eine Öffnung in der Seitenwandung mit dem Strömungsweg zwischen der Eingangsöffnung und der Ausgangsöffnung in Verbindung. Die Druckentlastungskammer kann zumindest teilweise aus einem dehnbaren Material gebildet sein, das sich bei Erreichen eines bestimmten Wasserdrucks ausdehnt, so dass sich das Volumen der Druckentlastungskammer vergrößert. Die Druckentlastungskammer kann aber auch aus einem starren Material gebildet sein und in seinem Inneren ein bewegliches Element aufweisen, das durch seine Position innerhalb der Druckentlastungskammer deren Volumen festlegt.

Mit der erfindungsgemäßen Vorrichtung lassen sich Schäden an einem Wassersystem durch einen kritischen Überdruck dadurch vermeiden, dass sich das Wasser in die Druckentlastungskammer ausdehnt, dessen Volumen sich dabei vergrößert, sodass der Wasserdruck abnimmt. Vorzugsweise ist der Druckentlastungskammer ein Entleerungsmechanismus zugeordnet, welcher das Wasser aus der Druckentlastungskammer entfernt, um eine Stagnation zu vermeiden. Der Entleerungsmechanismus kann in dem zumindest einen Teil der Druckentlastungskammer ausbildenden dehnbaren Material verwirklicht sein, das bei einer Druckabnahme, beispielsweise im Falle einer Wasserentnahme durch einen Verbraucher, seine ursprüngliche Position wieder einnimmt und dadurch das Volumen der Druckentlastungskammer wieder auf das ursprüngliche Maß reduziert. Der Entleerungsmechanismus kann auch ein Entleerungsventil oder einen Schieber beinhalten, wobei der Schieber vorzugsweise derart gesteuert ist, dass das Wasser aus der Druckentlastungskammer bei einer Wasserentnahme durch einen Verbraucher aus der Druckentlastungskammer gedrückt wird.

Nach einer bevorzugten Weiterbildung der vorliegenden Erfindung ist in dem Strömungsweg zwischen der Eingangsöffnung und der Ausgangsöffnung des Gehäuses ein Strömungswiderstandselement angeordnet. Die Druckentlastungskammer kommuniziert nach dieser Weiterbildung über einen das Widerstandselement umgehenden Bypass mit dem Strömungsweg, wobei das Widerstandselement und der Bypass derart eingereicht sind, dass bei einer Strömung von der Eingangsöffnung zu der Ausgangsöffnung zumindest ein Teilstrom der Strömung das Widerstandselement durch den Bypass umgeht. Das Widerstandselement und der Bypass bilden demnach einen Strömungsteiler, der verhindert, dass Wasser in dem Bypass bzw. der Druckentlastungskammer stagniert. Als Strömungswiderstandselement kann beispielsweise eine den Strömungsweg verengende Blende oder dergleichen eingesetzt werden. Der Bypass kann eine Eingangsöffnung und eine Ausgangsöffnung haben, wobei die Eingangsöffnung des Bypass in einer Seitenwandung des Gehäuses im Strömungsweg vor dem Strömungswiderstandselement und die Ausgangsöffnung in der Seitenwandung des Gehäuses im Strömungsweg nach dem Widerstandselement vorgesehen ist. Die Bypass-EingangsÖffnung und die Bypass-Ausgangsöffnung sind vorzugsweise als Bohrung in der Seitenwandung ausgestaltet. Der Bypass kann aber auch eine Ausbuchtung in der Seitenwandung des Gehäuses seitlich des Strömungswiderstandselementes sein.

Nach einer weiteren bevorzugten Weiterbildung der vorliegenden Erfindung ist in der Druckentlastungskammer ein Druckentlastungselement vorgesehen, das beweglich in der Druckentlastungskammer angeordnet ist und durch seine Position das durchströmbare Volumen der Druckentlastungskammer festlegt. Bevorzugt ist das Druckentlastungselement derart eingerichtet, dass es seine Position innerhalb der Druckentlastungskammer ändert, wenn der Wasserdruck einen kritischen Wert überschreitet. Weiter bevorzugt liegt der kritische Wert bei 6 bar, 8 bar oder 10 bar. Besonders bevorzugt ist der kritische Wert einstellbar. Das Druckentlastungselement kann ein dehnbares Element sein, das das Volumen der Druckentlastungskammer vergrößert, indem es sich ausdehnt. Die Druckentlastungskammer kann auch zumindest teilweise von solch einem dehnbaren Element ausgebildet sein. Das Druckentlastungselement kann aber auch ein starres Element sein, das verschieblich in der Druckentlastungskammer gehalten ist.

Nach einer weiteren bevorzugten Weiterbildung der vorliegenden Erfindung ist das Druckentlastungselement vorgespannt. In der Regel ist das Druckentlastungselement mittels einer Feder, üblicherweise in Richtung auf den Bypass vorgespannt. Dadurch lässt sich das Volumen der Druckentlastungskammer auf einfache Mittel in Abhängigkeit des Wasserdrucks variabel halten.

Nach einer weiteren bevorzugten Weiterbildung der vorliegenden Erfindung beträgt ein maximales durchströmbares Volumen der Druckentlastungskammer zwischen 0,01 und 0,25 l. Besonders bevorzugt beträgt das maximale durchströmbare Volumen der Druckentlastungskammer 0,17 l. Die in den Warmwasserleitungen eines Trinkwassersystems zur erwartenden Druckerhöhungen müssen von der Druckentlastungskammer aufgenommen werden können. Andererseits sollte die Druckentlastungskammer aufgrund des Materialeinsatzes und der leichten Montage nicht größer als notwendig bemessen sein. Daher sollte die Druckentlastungskammer nach dieser bevorzugten Weiterbildung ausgestaltet sein.

Erfindungsgemäß weist das Gehäuse eine dritte Öffnung auf und ist zwischen der Eingangsöffnung und der dritten Öffnung als Rohrstück ausgebildet, von dem eine Leitungsstrecke abzweigt, deren freies Ende die Ausgangsöffnung ausbildet, wobei eine Wandung der Leitungsstrecke aus einem thermisch isolierenden Material hergestellt ist.

Das Rohrstück zwischen der Eingangsöffnung und der dritten Öffnung des Gehäuses ist ein gerades Rohrstück. Für gewöhnlich ist auch die davon abzweigende Leitungsstrecke ein gerades Rohrstück. Üblicherweise bilden das Rohrstück zwischen der Eingangsöffnung und der dritten Öffnung und die Leitungsstrecke ein T-Stück. Die Wandung der Leitungsstrecke aus thermisch isolierendem Material kann beispielsweise durch ein Kunststoffrohr gebildet sein. Die Druckentlastungskammer kann nach dieser Weiterbildung dem Rohrstück zwischen der Eingangsöffnung und der dritten Öffnung des Gehäuses oder der Leitungsstrecke zugeordnet sein.

So lässt sich eine Wärmeübertragung von der Seite des Gehäuses mit der Eingangsöffnung und der dritten Öffnung zu der Seite des Gehäuses mit der Ausgangsöffnung verhindern. Des Weiteren lässt sich die Vorrichtung derart im Schwerefeld der Erde anordnen, dass die Eingangsöffnung und die dritte Öffnung oberhalb der Ausgangsöffnung sind. So lässt sich innerhalb der Vorrichtung eine thermische Schichtung nach Art eines Thermosiphoneffekts dadurch erzielen, dass wärmeres Wasser in der Vorrichtung nach oben steigt und kälteres Wasser in der Vorrichtung nach unten sinkt. Schließt man die Eingangsöffnung und die dritte Öffnung des Gehäuses derart an ein Warmwassersystem mit Zirkulationsleitung an, dass die Eingangsöffnung und die dritte Öffnung oberhalb der Ausgangsöffnung angeordnet sind, bildet das Rohrstück zwischen der Eingangsöffnung und der dritten Öffnung in der Regel einen Strömungsweg zur Zirkulation des Warmwassers. An die Ausgangsöffnung ist üblicherweise eine Armatur angeschlossen. Bei geschlossener Armatur lässt sich somit durch den genannten Thermosiphoneffekt und die Wandung der Leitungsstrecke aus thermisch isolierendem Material vermeiden, dass sich das Armaturengehäuse zu stark erwärmt. Da die Armatur für gewöhnlich als Mischarmatur auch an eine Kaltwasserleitung angeschlossen ist, wird mit der erfindungsgemäßen Vorrichtung nach der bevorzugten Weiterbildung das Kaltwasser auf der Kaltwasserseite der Armatur weniger stark erwärmt. Bekanntlich ist kaltes Trinkwasser in Kaltwasserleitungen unter 25°C zu halten, um die Bildung von Legionellen zu vermeiden.

In einem nebengeordneten Aspekt gibt die vorliegende Erfindung ein Modul zum Anschluss einer Mischarmatur an ein Trinkwassersystem an, wobei das Modul eine erfindungsgemäße Vorrichtung zur Führung von Warmwasser, eine von der Vorrichtung getrennte Leitung mit mindestens einer Eingangsöffnung und einer Ausgangsöffnung zur Führung von Kaltwasser und ein äußeres Gehäuse, das die Vorrichtung und die Leitung einhaust, aufweist. Mithilfe des Moduls lässt sich eine Mischarmatur an ein Trinkwassersystem anschließen und die Wärmeübertragung von der Warmwasserseite des Trinkwassersystems auf die Kaltwasserseite des Trinkwassersystems durch das Armaturengehäuse, welches für gewöhnlich aus gut wärmeleitendem Material wie beispielsweise Metall oder Edelstahl hergestellt ist, verhindern. Darüber hinaus werden Schäden an der Mischarmatur und den Leitungen durch einen Überdruck in den Warmwasserleitungen vermieden. Das äußere Gehäuse schützt für gewöhnlich die Vorrichtung und die Kaltwasserleitung vor Stößen und anderen mechanischen Einflüssen. Das Modul kann in der Regel auf Putz oder unter Putz installiert werden. Bei der Installation auf Putz hat das äußere Gehäuse meist auch eine ästhetische Funktion. In der Regel haust das äußere Gehäuse die Vorrichtung und die Leitung derart ein, dass lediglich die Schnittstellen an den jeweiligen Öffnungen der Vorrichtung bzw. der Leitung an dem äußeren Gehäuse freiliegen. In der Regel liegen diese Schnittstellen an einer das äußere Gehäuse umfänglich umlaufenden Seitenwand des äußeren Gehäuses frei.

Nach einer weiteren bevorzugten Weiterbildung der vorliegenden Erfindung weist das äußere Gehäuse eine die Vorrichtung und die Leitung umgebende Dämmschale auf. Die Dämmschale wird in der Regel auf eine Basisplatte aufgesetzt, auf der die Vorrichtung und die Leitung montiert sind. Im Inneren der Dämmschale ist für gewöhnlich ein geschäumtes Material vorgesehen, das mit Aussparungen versehen ist, die eine der Vorrichtung bzw. der Leitung korrespondierende Form haben. Denkbar ist auch, dass das äußere Gehäuse einteilig aus einem geschäumten Material hergestellt ist.

Nach einer weiteren bevorzugten Weiterbildung der vorliegenden Erfindung ist das Modul derart im Schwerefeld der Erde ausrichtbar, dass die Eingangsöffnung und die dritte Öffnung der Vorrichtung zur Führung von Warmwasser höher als die Eingangsöffnung der Leitung zur Führung von Kaltwasser und dass die Ausgangsöffnung der Vorrichtung und die Ausgangsöffnung der Leitung auf gleicher Höhe angeordnet sind. So lässt sich eine Mischarmatur über die Ausgangsöffnung der Vorrichtung und die Ausgangsöffnung der Leitung an ein Trinkwassersystem anschließen und mittels des Thermosiphoneffektes eine Wärmeübertragung von der Warmwasserseite des Trinkwassersystems zu der Kaltwasserseite des Trinkwassersystems vermindern.

Weitere Einzelheiten und Vorteile der vorliegenden Erfindung ergeben sich aus der nachfolgenden Beschreibung eines Ausführungsbeispiels in Verbindung mit der Zeichnung. In dieser zeigen:
- Figur 1: eine schematische Darstellung eines Ausführungsbeispiels einer Vorrichtung;
- Figur 2: Seitenansicht eines Ausführungsbeispiels eines erfindungsgemäßen Moduls mit Dämmschale und
- Figur 3: Seitenansicht des Moduls aus Figur 2 mit Dämmgehäuse und angeschlossener Armatur.

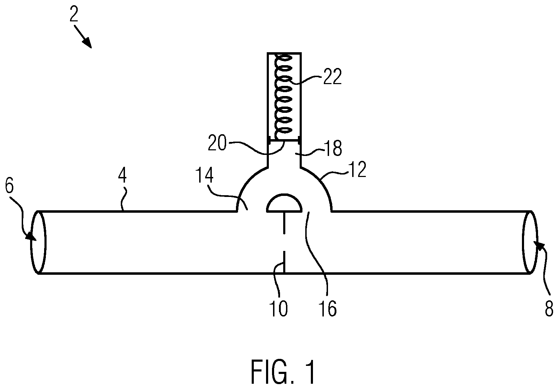

Die Figur 1 zeigt eine schematische Darstellung eines Ausführungsbeispiels einer Vorrichtung 2. Die Vorrichtung 2 umfasst ein rohrförmiges Gehäuse 4 mit zwei sich gegenüberliegenden freien Enden, wobei das eine freie Ende die Eingangsöffnung 6 und das gegenüberliegende freie Ende die Ausgangsöffnung 8 des Gehäuses 4 ausbilden. Zwischen der Eingangsöffnung 6 und der Ausgangsöffnung 8 bildet das Gehäuse 4 einen Strömungsweg aus. Innerhalb des Gehäuses 4 ist eine Blende 10 als Strömungswiderstandselement vorgesehen. Die Blende 10 ist in dem Strömungsweg angeordnet und verengt den Durchmesser des Gehäuses 4 an dieser Stelle. Ein im Wesentlichen ringförmiger Bypass 12 bildet eine Umgehung der Blende 10, sodass ein Teil einer Strömung von der Eingangsöffnung 6 zu der Ausgangsöffnung 8 durch den Bypass hinter die Blende gelangt, ohne durch die Blende 10 hindurchzufließen. Jeweils eine zu dem im Wesentlichen ringförmigen Bypass 12 führende Bypassöffnung 14, 16 ist in einer Seitenwandung des Gehäuses 4 vor und hinter der Blende 10 vorgesehen. Eine äußere Umfangsfläche des ringförmigen Abschnitts des Bypasses geht in eine Druckentlastungskammer 18 über. In der Druckentlastungskammer 18 ist ein Druckentlastungselement 20 angeordnet, das durch seine Position innerhalb der Druckentlastungskammer 18 das durchströmbare Volumen der Druckentlastungskammer 18 festlegt. Das Druckentlastungselement 20 ist mittels einer Feder 22 vorgespannt.

Bei einer Strömung von der Eingangsöffnung 6 zu der Ausgangsöffnung 8 wirken die Blende 10 und der Bypass 12 als Strömungsteiler, d.h. ein Teil der Strömung fließt durch die Blende 10 hindurch und der andere Teil der Strömung umgeht die Blende 10 durch den Bypass 12. Die Vorrichtung 2 eignet sich somit insbesondere zum Einsatz in einem Trinkwassersystem, da die Druckentlastungskammer 18 stets durchspült wird und eine Stagnation, die die Bildung von Keimen begünstigt, vermieden wird. Bei einem kritischen Wasserdruck in der Vorrichtung 2 dehnt sich das Wasser in der Druckentlastungskammer 18 entgegen der Federkraft der Feder 22, die entsprechend eingestellt ist, aus. Dabei wird die Feder 22 gespannt, das Volumen der Druckentlastungskammer 18 vergrößert und der Wasserdruck in der Vorrichtung bleibt auf einem nicht kritischen Niveau. Nimmt der Wasserdruck in der Vorrichtung 2 weiter ab, beispielsweise durch Wasserentnahme oder durch Abkühlung, entspannt sich die Feder 22 und drückt dabei das Wasser aus der Druckentlastungskammer über den Bypass 12 zurück in den Strömungsweg zwischen der Eingangsöffnung 6 und der Ausgangsöffnung 8.

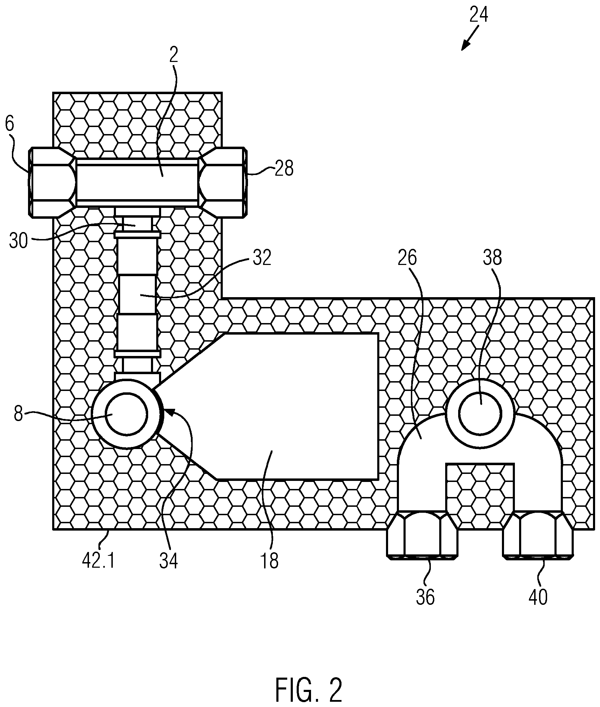

Die Figur 2 zeigt eine Seitenansicht eines Ausführungsbeispiels einer erfindungsgemäßen Vorrichtung 2 und eines erfindungsgemäßen Moduls 24. Das Modul 24 beinhaltet eine Vorrichtung 2 zur Druckentlastung eines Wassersystems und eine von der Vorrichtung 2 getrennte Leitung 26. Die Vorrichtung 2 hat eine der Eingangsöffnung 6 gegenüberliegende dritte Öffnung 28 und ist zwischen diesen beiden Öffnungen als gerades Rohrstück ausgebildet. Von diesem geraden Rohrstück zweigt mittig eine Leitungsstrecke 30 ab, die an ihrem freien Ende die Ausgangsöffnung 8 des Gehäuses der Vorrichtung 2 ausbildet. Die Leitungsstrecke 30 weist einen Rohrabschnitt 32 aus Kunststoff auf, der den Teil des Gehäuses, welcher die Ausgangsöffnung 8 aufweist, von dem Teil des Gehäuses, welcher die Eingangsöffnung 6 und die dritte Öffnung 28 aufweist, thermisch trennt. Das freie Ende der Leitungsstrecke 30 ist als 90°-Winkelstück ausgeformt, wobei im Eckbereich des Winkelstücks ein in der Figur nicht dargestellter Strömungsteiler 34 aus Blende und Bypass vorgesehen ist. Der Bypass führt in eine Druckentlastungskammer 18, die wie die Druckentlastungskammer 18 aus Figur 1 ausgestaltet sein kann.

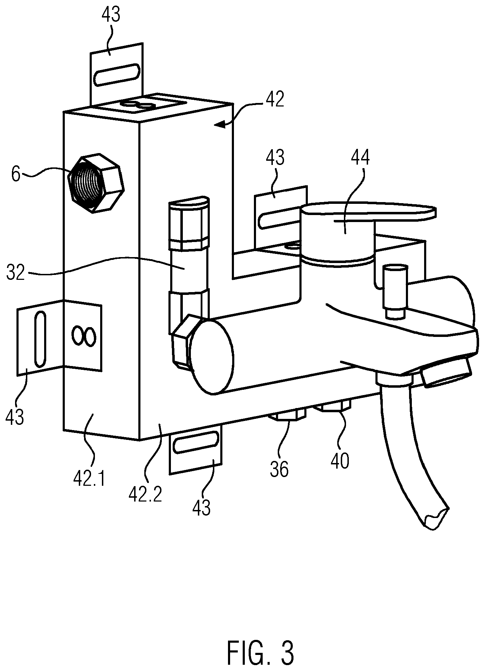

Das Modul 24 ist über die Eingangsöffnung 6 und die dritte Öffnung 28 an eine Warmwasserversorgung mit Zirkulationsleitung anschließbar. Die Leitung 26 ist zur Führung von Kaltwasser vorgesehen. Sie weist eine Eingangsöffnung 36, eine Ausgangsöffnung 38 und eine dritte Öffnung 40 auf. An die Ausgangsöffnung 8 der Vorrichtung 2 und die Ausgangsöffnung 38 der Kaltwasserleitung 26 ist eine Mischarmatur anschließbar. Das Modul 24 ist dabei derart im Schwerefeld der Erde angeordnet, dass die Warmwasserversorgung von oben und die Kaltwasserversorgung von unten an die Mischarmatur angeschlossen sind. Dadurch wird der Thermosiphoneffekt ausgenutzt, um die Wärmeübertragung von der Warmwasserseite des Systems zu der Kaltwasserseite des Systems über das Armaturengehäuse zu vermindern. Dieser Effekt wird durch den Kunststoffrohrabschnitt 32 verstärkt, der das Armaturengehäuse von dem Gehäuseteil der Vorrichtung 2 thermisch trennt, in dem das Warmwasser zirkuliert. Die Figur 3 zeigt eine Seitenansicht des Moduls aus Figur 2 mit einer erfindungsgemäßen Vorrichtung 2, wobei die Vorrichtung 2 und die Kaltwasserleitung 26 von einem Dämmgehäuse 42 wärmdämmend eingehaust und umgeben sind, welches sich aus der in Figur 2 gekennzeichneten Dämmschale 42.1 und einer korrespondierend dazu ausgebildeten und in Figur 3 mit Bezugszeichen 42.2 gekennzeichneten Abdeckung zusammensetzt. An der Dämmschale 42.1 liegen im Wesentlichen nur die Schnittstellen der jeweiligen Öffnungen der Vorrichtung 2 bzw. der Kaltwasserleitung 26 frei. Die Dämmschale 42.1 hat Befestigungselemente 43 zur Montage der in Figur 3 gezeigten Einheit an einer Wand. Eine Mischarmatur 44 ist an die Ausgangsöffnung 8 der Vorrichtung 2 und die Ausgangsöffnung 38 der Kaltwasserleitung 26 angeschlossen.

### Bezugszeichenliste

- 2: Vorrichtung zur Druckentlastung eines Wassersystems
- 4: Gehäuse
- 6: Eingangsöffnung
- 8: Ausgangsöffnung
- 10: Widerstandselement / Blende
- 12: Bypass
- 14, 16: Bypassöffnung
- 18: Druckentlastungskammer
- 20: Druckentlastungselement
- 22: Feder
- 24: Modul zum Anschluss einer Mischarmatur an ein Trinkwassersystem
- 26: Leitung
- 28: dritte Öffnung
- 30: Leitungsstrecke
- 32: Kunststoffrohr
- 34: Strömungsteiler
- 36: Eingangsöffnung
- 38: Ausgangsöffnung
- 40: dritte Öffnung
- 42: Dämmgehäuse
- 42.1: Dämmschale
- 42.2: Abdeckung
- 43: Befestigungslemente
- 44: Mischarmatur

## Patentansprüche

1. Vorrichtung (2) zur Druckentlastung eines Trinkwassersystems, umfassend ein Gehäuse (4) mit einer Eingangsöffnung (6) und einer Ausgangsöffnung (8), das einen Strömungsweg zwischen der Eingangsöffnung (6) und der Ausgangsöffnung (8) ausbildet, und
eine fluidisch mit dem Strömungsweg in Verbindung stehende Druckentlastungskammer (18) mit variablem Volumen zur Aufnahme von in dem Trinkwassersystem aufgrund von Erwärmen des Wassers zu erwartenden Druckerhöhungen, **dadurch gekennzeichnet, dass** das Gehäuse (4) eine dritte Öffnung (28) aufweist und zwischen der Eingangsöffnung (6) und der dritten Öffnung (28) als gerades Rohrstück ausgebildet ist, von dem eine Leitungsstrecke (30) abzweigt, deren freies Ende die Ausgangsöffnung (8) ausbildet, und dass eine Wandung der Leitungsstrecke (30) aus einem thermisch isolierenden Material hergestellt ist.

2. Vorrichtung (2) nach Anspruch 1, **dadurch gekennzeichnet,**
**dass** in dem Strömungsweg ein Strömungswiderstandselement (10) angeordnet ist und dass die Druckentlastungskammer (18) über einen das Widerstandselement (10) umgehenden Bypass (12) mit dem Strömungsweg kommuniziert, und
**dass** das Widerstandselement (10) und der Bypass (12) derart eingerichtet sind, dass bei einer Strömung von der Eingangsöffnung (6) zu der Ausgangsöffnung (8) zumindest ein Teilstrom der Strömung das Widerstandselement (10) durch den Bypass (12) umgeht.

3. Vorrichtung (2) nach Anspruch 1 oder 2, **gekennzeichnet durch** ein in der Druckentlastungkammer (18) vorgesehenes Druckentlastungselement (20), das beweglich in der Druckentlastungskammer (18) angeordnet ist und durch seine Position das durchströmbare Volumen der Druckentlastungskammer (18) festlegt.

4. Vorrichtung (2) nach Anspruch 3, **dadurch gekennzeichnet, dass** das Druckentlastungselement (20) derart eingerichtet ist, dass es seine Position innerhalb der Druckentlastungskammer (18) ändert, wenn der Wasserdruck einen kritischen Wert überschreitet.

5. Vorrichtung (2) nach Anspruch 4, **dadurch gekennzeichnet, dass** der kritische Wert 6, 8 oder 10 bar beträgt.

6. Vorrichtung (2) nach Anspruch 4 oder 5, **dadurch gekennzeichnet, dass** der kritische Wert einstellbar ist.

7. Vorrichtung (2) nach einem der vorherigen Ansprüche, **dadurch gekennzeichnet, dass** das Druckentlastungselement (20) vorgespannt ist.

8. Vorrichtung (2) nach einem der vorherigen Ansprüche, **dadurch gekennzeichnet, dass** ein maximales durchströmbares Volumen der Druckentlastungskammer (18) zwischen 0,01 und 0,25 Liter, bevorzugt ca. 0,17 Liter beträgt.

9. Vorrichtung (2) nach einem der vorherigen Ansprüche, **dadurch gekennzeichnet, dass** das Gehäuse (4) zwischen der Eingangsöffnung (6), der Ausgangsöffnung (8) und der dritten Öffnung (28) einen im Wesentlichen T-förmigen Strömungsweg definiert.

10. Modul (24) zum Anschluss einer Mischarmatur an ein Trinkwassersystem, umfassend eine Vorrichtung (2) nach einem der vorherigen Ansprüche zur Führung von Warmwasser, eine von der Vorrichtung (2) getrennte Leitung (26) mit mindestens einer Eingangsöffnung (36) und einer Ausgangsöffnung (38) zur Führung von Kaltwasser, und
ein äußeres Gehäuse, das die Vorrichtung (2) und die Leitung (26) einhaust.

11. Modul (24) nach Anspruch 10, **dadurch gekennzeichnet, dass** das äußere Gehäuse eine die Vorrichtung (2) und die Leitung (26) umgebende Dämmschale (42) aufweist.

12. Modul (24) nach einem der Ansprüche 10 oder 11, **dadurch gekennzeichnet, dass** das Modul (24) derart im Schwerefeld der Erde ausrichtbar ist, dass die Eingangsöffnung (6) und die dritte Öffnung (28) der Vorrichtung (2) zur Führung von Warmwasser höher als die Eingangsöffnung (36) der Leitung (26) zur Führung von Kaltwasser und dass die Ausgangsöffnung (8) der Vorrichtung (2) und die Ausgangsöffnung (38) der Leitung (26) auf gleicher Höhe angeordnet sind.

## Claims

1. Device (2) to relieve pressure in a drinking water system, comprising a housing (4) with an inlet opening (6) and an outlet opening (8), which forms a flow path between the inlet opening (6) and the outlet opening (8), and
a pressure relief chamber (18) which is in fluid connection with the flow path, with variable volume to absorb pressure increases that are to be anticipated in the drinking water due to heating of the water,
**characterised in that**
the housing (4) has a third opening (28) and between the inlet opening (6) and the third opening (28) it is designed as a straight pipe section from which one conduit section (30) branches off, the free end of which forms the outlet opening (8), and
that a wall of the conduit section (30) is manufactured from a thermally insulating material.

2. Device (2) according to claim 1, **characterised in that**
a flow resistance element (10) is arranged in the flow path
and that the pressure relief chamber (18) communicates with the flow path via a bypass (12) that bypasses the resistance element (10), and
that the resistance element (10) and the bypass (12) are arranged such that in the case of a flow from the inlet opening (6) to the outlet opening (8), at least part of the flow bypasses the resistance element (10) via the bypass (12).

3. Device (2) according to claim 1 or 2, **characterised by** a pressure relief element (20) which is provided in the pressure relief chamber (18) and which is arranged such that it can move in the pressure relief chamber (18), and through its position it sets the volume that can flow through the pressure relief chamber (18).

4. Device (2) according to claim 3, **characterised in that** the pressure relief element (20) is set up in such a way that it changes its position within the pressure relief chamber (18) when the water pressure exceeds a critical value.

5. Device (2) according to claim 4, **characterised in that** the critical value is 6, 8 or 10 bar.

6. Device (2) according to claim 4 or 5, **characterised in that** the critical value can be adjusted.

7. Device (2) according to one of the preceding claims, **characterised in that** the pressure relief element (20) is pre-loaded.

8. Device (2) according to one of the preceding claims, **characterised in that** a maximum volume that can flow through the pressure relief chamber (18) is between 0.01 and 0.25 litres, preferably approx. 0.17 litres.

9. Device (2) according to one of the preceding claims, **characterised in that** the housing (4) defines an essentially T-shaped flow path between the inlet opening (6), the outlet opening (8) and the third opening (28).

10. Module (24) for connecting a mixing valve to a drinking water system, comprising a device (2) according to one of the preceding claims for the supply of hot water,
a conduit (26) separated from the device (2) with at least one inlet opening (36) and an outlet opening (38) for the supply of cold water, and
an outer housing that surrounds the device (2) and the conduit (26).

11. Module (24) according to claim 10, **characterised in that** the outer housing has an insulating shell (42) that surrounds the device (2) and the conduit (26).

12. Module (24) according to one of the claims 10 or 11, **characterised in that** the module (24) can be oriented in the gravitational field of the Earth such that the inlet opening (6) and the third opening (28) of the device (2) for supplying hot water is arranged higher than the inlet opening (36) of the conduit (26) for supplying cold water, and that the outlet opening (8) of the device (2) and the outlet opening (38) of the conduit (26) are arranged at the same height.

## Revendications

1. Dispositif (2) de décharge de pression d'un système d'eau potable, comprenant un carter (4) présentant un orifice d'entrée (6) et un orifice de sortie (8) et formant un chemin d'écoulement entre l'orifice d'entrée (6) et l'orifice de sortie (8), et
une chambre de décharge de pression (18) à volume variable, en communication fluidique avec le chemin d'écoulement, et permettant d'accueillir des augmentations de pression attendues dans le système d'eau potable en raison de l'échauffement de l'eau, **caractérisé en ce que** :
le carter (4) présente un troisième orifice (28) et est réalisé entre l'orifice d'entrée (6) et le troisième orifice (28) sous la forme d'une pièce tubulaire rectiligne à partir de laquelle se ramifie un segment de partie de conduite (30) dont l'extrémité libre forme l'orifice de sortie (8), et **en ce que**
une paroi du segment de conduite (30) est fabriquée à partir d'un matériau thermiquement isolant.

2. Dispositif (2) selon la revendication 1, **caractérisé en ce que**
un élément de résistance à l'écoulement (10) est agencé dans le chemin d'écoulement et **en ce que** la chambre de décharge de pression (18) communique avec le chemin d'écoulement par l'intermédiaire d'une dérivation (12) contournant l'élément de résistance (10), et
l'élément de résistance (10) et la dérivation (12) sont conçus de telle manière que dans le cas d'un écoulement allant de l'orifice d'entrée (6) vers l'orifice de sortie (8), au moins un flux partiel de l'écoulement contourne l'élément de résistance (10) grâce à la dérivation (12).

3. Dispositif (2) selon la revendication 1 ou 2, **caractérisé par** un élément de décharge de pression (20) fourni dans la chambre de décharge de pression (18), agencé de manière mobile dans la chambre de décharge de pression (18) et définissant grâce à sa position le volume de la chambre de décharge de pression (18) qui peut être traversé.

4. Dispositif (2) selon la revendication 3, **caractérisé en ce que** l'élément de décharge de pression (20) est conçu de manière à modifier sa position à l'intérieur de la chambre de décharge de pression (18) lorsque la pression d'eau dépasse une valeur critique.

5. Dispositif (2) selon la revendication 4, **caractérisé en ce que** la valeur critique est de 6, 8 ou 10 bars.

6. Dispositif (2) selon la revendication 4 ou 5, **caractérisé en ce que** la valeur critique peut être ajustée.

7. Dispositif (2) selon l'une quelconque des revendications précédentes, **caractérisé en ce que** l'élément de décharge de pression (20) est précontraint.

8. Dispositif (2) selon l'une quelconque des revendications précédentes, **caractérisé en ce qu'**un volume maximal pouvant être traversé de la chambre de décharge de pression (18) est compris entre 0,01 et 0,25 litre, et est de manière préférée d'environ 0,17 litre.

9. Dispositif (2) selon l'une quelconque des revendications précédentes, **caractérisé en ce que** le carter (4) définit un chemin d'écoulement essentiellement en forme de T entre l'orifice d'entrée (6), l'orifice de sortie (8) et le troisième orifice (28).

10. Module (24) permettant le raccordement d'un robinet mélangeur à un système d'eau potable, comprenant :
un dispositif (2) selon l'une quelconque des revendications précédentes et permettant d'acheminer de l'eau chaude,
une conduite (26) séparée du dispositif (2), avec au moins un orifice d'entrée (36) et un orifice de sortie (38) et permettant d'acheminer de l'eau froide, et
un boîtier extérieur renfermant le dispositif (2) et la conduite (26).

11. Module (24) selon la revendication 10, **caractérisé en ce que** le boîtier extérieur présente une coque isolante (42) entourant le dispositif (2) et la conduite (26).

12. Module (24) selon la revendication 10 ou 11, **caractérisé en ce que** le module (24) peut être orienté dans le champ de gravité terrestre de telle manière que l'orifice d'entrée (6) et le troisième orifice (28) du dispositif (2) permettant d'acheminer de l'eau chaude sont agencées plus haut que l'orifice d'entrée (36) de la conduite (26) permettant d'acheminer de l'eau froide et que l'orifice de sortie (8) du dispositif (2) et l'orifice de sortie (38) de la conduite (26) sont agencés à la même hauteur.
